# FASCICULE DE BREVET EUROPEEN

(11) **EP 0 894 672 B1**
(45) Date de publication et mention de la délivrance du brevet: **05.02.2003**
(21) Numéro de dépôt: 98401904.2
(22) Date de dépôt: 27.07.1998
(51) Int. Cl.: B60R 9/045

(54) **Porte-charge pour un véhicule automobile équipé d'un galerie fixe de toit**
Lastenträger für Kraftfahrzeuge mit fester Dachreling
Load carrier for vehicles with fixed roof rails

(30) Priorité: 28.07.1997 FR 9709560
(43) Date de publication de la demande: 03.02.1999
(73) Titulaire: SCAMBIA INDUSTRIAL DEVELOPMENTS AKTIENGESELLSCHAFT, 9494 Schaan (LI)
(72) Inventeur: Poulet, Serge, 77170 Brie Comte robert (FR); Sarges, Bernard, 77120 Coulommiers (FR)
(74) Mandataire: Eder, Carl E.

(56) Documents cités:
- WO-A-96/24509
- WO-A-97/11864
- DE-U- 8 913 601
- DE-U- 9 015 530

## Description

La présente invention concerne un porte-charge pour un véhicule automobile équipé d'une galerie fixe de toit essentiellement composée de deux barres longitudinales courant le long des côtés longitudinaux du toit du véhicule, ledit porte-charge comprenant au moins une barre porte-charge qui comporte, dans chacune de ses régions d'extrémité, un dispositif de fixation pour fixer de façon détachable la barre porte-charge à une barre longitudinale respective de la galerie de toit, ladite barre porte-charge ayant au moins un canal longitudinal délimité par une paroi supérieure, deux parois latérales et une paroi inférieure qui présente une fente s'étendant sur au moins une partie de la longueur de la barre porte-charge, chaque dispositif de fixation comprenant une paire de mâchoires qui peuvent être déplacées dans le sens longitudinal de la barre porte-charge et qui comportent chacune une partie supérieure logée dans le canal de la barre porte-charge et une partie inférieure qui fait saillie sous la barre porte-charge pour saisir latéralement la barre longitudinale correspondante de la galerie de toit, chaque mâchoire comportant dans ses côtés opposés, qui font face aux parois latérales du canal, des rainures coopérant avec les bords de la fente pour le guidage de la mâchoire le long de la fente, et une vis de serrage qui s'étend sensiblement dans le sens longitudinal de la barre porte-charge et qui, lorsqu'elle est vissée dans un écrou, coopère avec celui-ci pour déplacer les deux mâchoires l'une vers l'autre et pour serrer entre elles la barre longitudinale de la galerie de toit, et en même temps pour bloquer l'une des deux mâchoires dans le canal de la barre porte-charge.

Un porte-charge du genre décrit ci-dessus est déjà connu (voire la demande de brevet internationale WO 94/21 490). Dans ce porte-charge connu, la vis de serrage de chaque dispositif de fixation s'étend longitudinalement à l'intérieur du canal de la barre porte-charge et passe librement dans des trous formés respectivement dans la partie supérieure de chacune des deux mâchoires du dispositif de fixation. La partie supérieure de chacune des deux mâchoires a, vue en coupe transversale, un profil correspondant au profil de la section transversale du canal de la barre porte-charge. La partie supérieure d'au moins l'une des deux mâchoires, par exemple celle qui est la plus éloignée de l'extrémité de la barre porte-charge, a, vue en coupe longitudinale, un profil en forme de coin sur son côté orienté à l'opposé de l'autre mâchoire, de manière à former une première cale de fixation. L'écrou est réalisé sous la forme d'une seconde cale de fixation, de telle sorte que au moins sa face frontale orientée vers la première cale de fixation présente un profil en coin complémentaire de celui de cette première cale de fixation. Ainsi, lorsque la vis de serrage est vissée dans l'écrou, la tête de la vis et l'écrou agissent respectivement sur les deux mâchoires de manière à les rapprocher l'une de l'autre pour qu'elles enserrent entre elles l'une des barres longitudinales de la galerie de toit. En même temps, du fait des profils en coin des deux cales de fixation formées respectivement par l'écrou et par la partie supérieure de la mâchoire adjacente, les deux cales de fixation se poussent mutuellement respectivement vers le haut et vers le bas, de sorte que l'une des cales de fixation est pressée contre la paroi supérieure du canal de la barre porte-charge, tandis que l'autre cale de fixation est pressée contre la paroi inférieure dudit canal, provoquant ainsi un ancrage des deux cales de fixation dans le canal.

Ainsi, ce porte-charge connu offre l'avantage que, à chaque extrémité de la barre porte-charge, un unique ensemble vis et écrou permet à la fois de fixer les deux mâchoires à la barre longitudinale correspondante de la galerie de toit et d'ancrer l'une des deux mâchoires dans le canal de la barre porte-charge. Toutefois, ce porte-charge connu présente quelques inconvénients. En particulier, l'outil utilisé pour visser ou dévisser la vis de serrage doit être introduit dans le canal de la barre porte-charge, par l'une des extrémités de celle-ci. Or, pour une barre porte-charge ayant une longueur donnée, la position de chaque paire de mâchoires par rapport à l'extrémité correspondante de la barre porte-charge dépend de l'écartement mutuel des deux barres longitudinales de la galerie de toit. Cet écartement n'est pas identique pour tous les modèles de véhicule et il peut en outre varier de l'avant à l'arrière des barres longitudinales de la galerie de toit pour un modèle donné de véhicule. En conséquence, chaque paire de mâchoires du porte-charge connu peut se trouver à une distance relativement grande de l'extrémité correspondante de la barre porte-charge en particulier lorsque le porte-charge est installé sur un modèle de véhicule dont la galerie fixe de toit a des barres longitudinales qui présentent l'écartement mutuel le plus faible. Dans ce cas, ou bien l'utilisateur doit scier la barre porte-charge pour la réduire en longueur, ou bien il doit utiliser un outil suffisamment long pour pouvoir atteindre la vis de serrage à l'intérieur du canal de la barre porte-charge. En outre, comme l'outil, en général un tournevis, utilisé pour visser ou dévisser la vis de serrage n'est pas guidé dans le canal de la barre porte-charge, il est difficile de positionner correctement son l'extrémité par rapport à la fente ou au six pans creux de la tête de la vis de serrage.

Un second inconvénient du porte-charge connu réside en ce que les deux cales de fixation peuvent s'ancrer dans le canal de la barre porte-charge avant que la mâchoire sur laquelle agit l'écrou vienne en contact avec la barre longitudinale de la galerie de toit. Dans ce cas, seule l'autre mâchoire viendra en contact avec ladite barre longitudinale et celle-ci ne sera donc pas serrée entre les deux mâchoires. Si l'utilisateur ne s'aperçoit pas de ce défaut de fixation, la barre porte-charge peut se détacher de la barre longitudinale pendant que le véhicule circule sur la route et provoquer de graves dégats.

Un troisième inconvénient du porte-charge connu réside en ce que les cales de fixation décrites dans la demande de brevet internationale précitée ne permettent pas d'obtenir un ancrage absolument certain de la mâchoire correspondante dans le canal de la barre porte-charge. En effet, la mâchoire est immobilisée uniquement par les forces de frottement créées entre les surfaces de contact de la paroi supérieure du canal de la barre porte-charge et de la première cale de fixation et entre les surfaces de contact de la paroi inférieure dudit canal et de l'autre cale de fixation. Ces forces de frottement sont directement proportionnelles aux composantes verticales des forces qui sont respectivement appliquées aux deux cales de fixation du fait de leur engagement mutuel par leurs faces frontales inclinées qui sont pressées l'une contre l'autre par la vis de serrage. La valeur de ces composantes verticales de force dépend de la valeur de l'angle de coin des deux cales de fixation. Plus cet angle est important, plus les composantes verticales de force sont petites, donc plus les forces de frottement sont faibles. Comme les cales de fixation ont un angle de coin relativement grand (environ 60° dans l'exemple représenté) les forces de frottement obtenues sont donc relativement faibles, d'où il en résulte un ancrage relativement faible de la mâchoire dans le canal de la barre porte-charge. On pourrait bien sûr obtenir un ancrage plus ferme de la mâchoire dans le canal de la barre porte-charge en diminuant l'angle de coin des cales de fixation. Toutefois, cela se produirait au détriment de la composante axiale ou horizontale de la force appliquée à la mâchoire et, par conséquent, au détriment du serrage des deux mâchoires contre les côtés opposés de la barre longitudinale de la galerie de toit. On peut également envisager de serrer plus fortement la vis de serrage, mais les deux mâchoires ont une section relativement faible à l'endroit où elles passent à travers la fente de la paroi inférieure de la barre porte-charge, et elles sont donc plus fragiles à cet endroit. Si la vis de serrage est plus fortement serrée, il y a donc un risque de rupture des mâchoires à cet endroit.

Enfin, si la mâchoire sur laquelle agit l'écrou-cale de fixation se rompt à l'endroit sus-indiqué, en service, la mâchoire tombe et la barre porte-charge n'est plus fixée à la barre longitudinale correspondante de la galerie de toit, ce qui créer manifestement une situation dangereuse.

La présente invention a pour but de fournir un porte-charge du genre sus-indiqué, dans lequel tout ou partie des inconvénients sus-mentionnés sont éliminés.

A cet effet, le porte-charge selon l'invention est caractérisé en ce que la tête de la vis de serrage est logée dans une cavité qui est formée dans la partie inférieure d'une première des deux mâchoires de telle façon que, en service, la vis de serrage s'étende au moins en partie au dessous de la paroi inférieure de la barre porte-charge, et en ce que les rainures latérales de la seconde des deux mâchoires sont conformées et/ou dimensionnées en largeur pour permettre, en plus d'un mouvement de translation de ladite seconde mâchoire le long de la fente de la barre porte-charge, un mouvement limité de basculement de ladite seconde mâchoire autour d'un axe transversal à l'axe longitudinal de la barre porte-charge sous l'action d'un couple de forces engendré par la force de serrage de la vis de serrage et par la force de réaction exercée sur la seconde mâchoire par la barre longitudinale de la galerie de toit, ledit mouvement de basculement provoquant un auto-blocage de la partie supérieure de ladite seconde mâchoire par coincement de celle-ci entre les parois supérieure et inférieure du canal de la barre porte-charge.

Dans ces conditions, la tête de la vis de serrage est toujours facilement accessible à travers un trou formé dans la partie inférieure de la première mâchoire, quelle que soit la position des deux mâchoires le long de la barre porte-charge. En outre, les contacts entre la partie supérieure de la seconde mâchoire et les parois supérieure et inférieure du canal de la barre porte-charge ne s'effectuent plus surface plane contre surface plane, mais sont des contacts quasiment ponctuels, donc avec de fortes pressions, de sorte que l'on obtient un ancrage particulièrement bon de la partie supérieure de la seconde mâchoire dans le canal de la barre porte-charge.

Dans une forme préférée de réalisation du porte-charge selon l'invention, la partie supérieure de la seconde mâchoire peut avoir, dans sa région supérieure orientée vers la paroi supérieure du canal de la barre porte-charge, un profil qui, vu dans une direction perpendiculaire à l'axe longitudinal de la barre porte-charge, a une forme en toit avec un jeu prédéterminé entre le sommet du profil en toit et la paroi supérieure dudit canal à l'état déserré de la vis de serrage. Ainsi, lorsque la seconde mâchoire bascule sous l'action du couple de forces susmentionné, le sommet du profil en toit entre en contact avec la paroi supérieure du canal et assure un bon ancrage de la mâchoire dans ledit canal.

Dans une forme préférée de réalisation de l'invention, l'écrou est logé dans la partie inférieure de la seconde mâchoire et peut être constitué par une plaque métallique qui comporte un trou taraudé et qui est logée dans une cavité en forme de fente qui s'étend à peu près verticalement vers le haut dans les parties inférieure et supérieure de la seconde mâchoire, jusqu'en haut de celle-ci, et dont la largeur augmente de bas en haut de la cavité. De préférence, la plaque-écrou s'étend vers le haut à travers la fente de la paroi inférieure de la barre porte-charge, jusque dans le canal de celle-ci, et elle comporte une partie supérieure qui est plus large que ladite fente et qui chevauche par en dessus les bords de la fente. Ainsi, en cas de rupture de la seconde mâchoire au niveau de ses deux rainures latérales, la partie inférieure de la seconde mâchoire reste tenue par la vis de serrage et serrée par celle-ci contre la barre longitudinale de la galerie de toit, et la plaque-écrou reste accrochée, par sa partie supérieure, dans le canal de la barre porte-charge, de sorte que celle-ci reste fixée à la barre longitudinale de la galerie de toit.

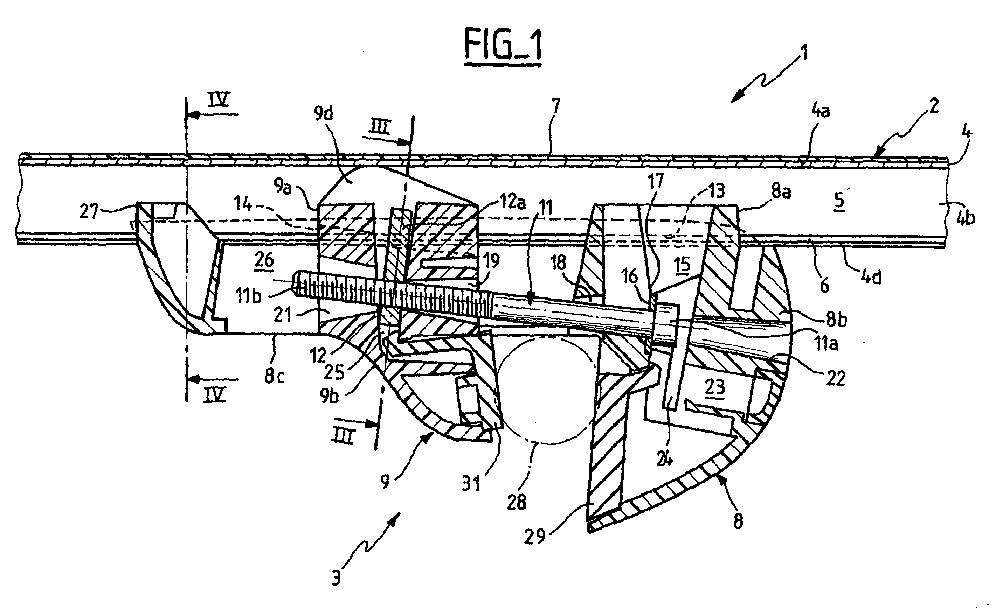

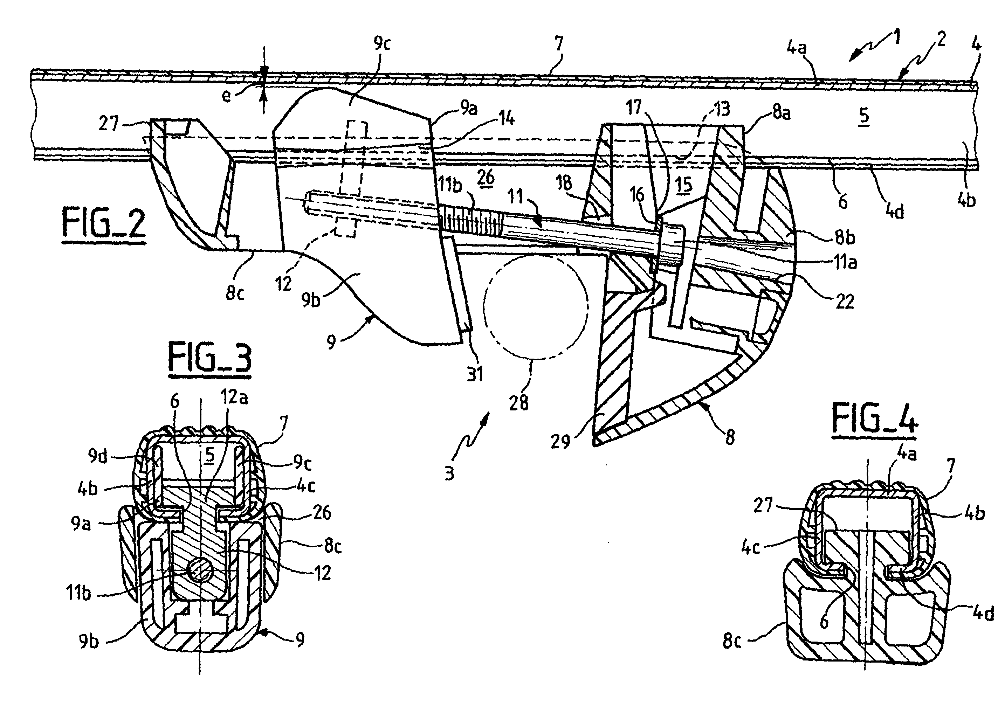

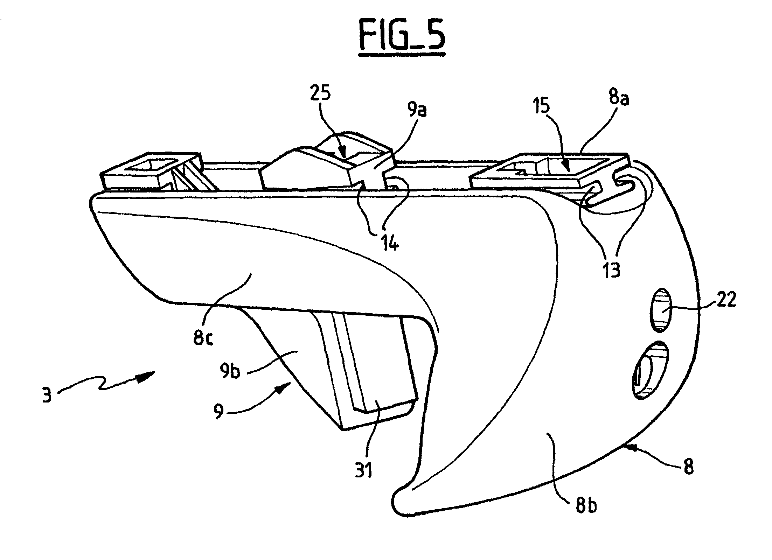

D'autres caractéristiques et avantages de l'invention ressortiront mieux au cours de la description suivante d'une forme préférée de réalisation de l'invention, en référence aux dessins annexés sur lesquels :
. la figure 1 est une vue en coupe verticale et longitudinale montrant une partie d'une barre porte-charge d'un porte-charge selon l'invention, avec l'un de ses deux dispositifs de fixation, ce dernier étant représenté à l'état serré ;
. la figure 2 est une vue semblable à la figure 1, le dispositif de fixation étant représenté à l'état desserré ;
. les figures 3 et 4 sont des vues en coupe respectivement suivant les lignes III-III et IV-IV de la figure 1 ;
. la figure 5 est une vue en perspective de l'un des deux dispositifs de fixation de la barre porte-charge.

Le porte-charge 1 représenté dans les figures 1 et 2 se compose essentiellement d'une barre porte-charge 2 partiellement montrée dans les figures 1 et 2, et de deux dispositifs de fixation 3, dont un seul est visible dans les figures 1 et 2 et qui sont disposés respectivement près des extrémités de la barre porte-charge 2. Les deux dispositifs de fixation 3 étant identiques et se déduisant simplement l'un de l'autre par une symétrie par rapport à un plan perpendiculaire à l'axe longitudinal de la barre porte-charge 2, on ne décrira par la suite qu'un seul des deux dispositifs de fixation.

La barre porte-charge 2 peut être constituée de façon connue, par un profilé 4, par exemple un profilé métallique, ayant au moins un canal longitudinal 5 délimité par une paroi supérieure 4a, deux parois latérales 4b et 4c et une paroi inférieure 4d. Bien que le profilé 4 montré dans les dessins ne comporte qu'un seul canal longitudinal, il pourrait comporter deux ou plusieurs canaux longitudinaux, par exemple comme ceux montrés dans la figure 3 du document WO 94/21 490 précité. La paroi inférieure 4d du profilé 4 présente une fente 6 qui peut s'étendre sur toute la longueur de la barre porte-charge 2 ou seulement dans chacune de ses régions d'extrémité. La barre porte-charge 2 peut comporter, de façon connue, une gaine 7, en matière plastique, qui entoure le profilé 4 sans recouvrir la ou les fentes 6. Toutefois, une telle gaine 7 n'est pas indispensable.

Le dispositif de fixation 3 comprend, de façon connue, une paire de mâchoires 8 et 9 qui sont mobiles le long de la barre porte-charge 2, et un dispositif de serrage constitué par une vis 11 et par un écrou 12 qui, lorsque la vis 11 est vissée dans l'écrou, agissent sur les deux mâchoires 8 et 9 pour les déplacer l'une vers l'autre et en même temps pour provoquer un blocage de la mâchoire 9 par rapport à la barre de toit 2 d'une manière qui sera décrite en détail plus loin.

Chacune des deux mâchoires 8 et 9 comporte une partie supérieure 8a ou 9a logée dans le canal 5 de la barre porte-charge 2 et une partie inférieure 8b ou 9b, qui s'étend vers le bas au dessous de la barre porte-charge. Les mâchoires 8 et 9 comportent une rainure 13 ou 14, respectivement, dans chacun de leurs côtés opposés. Les rainures 13 ou 14 coopèrent avec les bords de la fente 6 de la barre porte-charge 2 pour guider la mâchoire correspondante le long de ladite fente.

Selon une première caractéristique de la présente invention, la tête 11a de la vis 11 est logée dans une cavité 15 qui est formée dans la partie inférieure 8b de la mâchoire 8. La tête 11a de la vis 11 prend appui, directement ou par l'intermédiaire d'une rondelle 16, contre un épaulement 17 formé dans la cavité 15. La tige 11b de la vis 11 passe à travers un trou 18 de la partie inférieure 8b de la mâchoire 8, franchit l'espace entre les deux mâchoires 8 et 9 au dessous de la barre porte-charge 2, pénètre dans un trou 19 de la partie inférieure 9b de la mâchoire 9, passe à travers le trou taraudé de l'écrou 12 et ressort de la mâchoire 9 à travers un trou 21 de celle-ci. Un trou 22 est formé dans la partie inférieure 8b de la mâchoire 8, dans l'alignement du trou 18. Un outil, tel qu'un tournevis, peut être introduit dans ce trou 22 pour faire tourner la vis 11. Le trou 22 peut avoir un diamètre un peu plus grand que celui de la tête 11a de la vis 11 pour permettre la mise en place de celle-ci dans la mâchoire 8. Dans ce cas, la cavité 15 et l'épaulement 17 peuvent être simplement constitués par la partie interne du trou 22 et par le fond de celui-ci. Toutefois, selon une forme préférée de réalisation de l'invention, afin que, en service, la vis 11 ne puisse pas sortir par le trou 22 et soit donc imperdable, et afin que l'outil puisse être bien guidé jusqu'à la fente ou le six pans creux normalement prévu dans la tête 11a de la vis, le trou 22 a de préférence une forme légèrement conique, comme montré dans la figure 1 et 2, et son extrémité adjacente à la tête de vis 11a a un diamètre légèrement plus petit que le diamètre de cette dernière. Dans ce cas, pour que la vis 11 puisse être introduite dans la mâchoire 8 et enfilée dans le trou 18, la cavité 15 s'étend vers le haut jusque dans la partie supérieure 8a de la mâchoire 8 et débouche dans la face supérieure de celle-ci. En outre, la cavité 15 a, vue en coupe horizontale, une section sensiblement en forme de T comme montré dans la figure 5. Ainsi, la tige 11b de la vis 11 peut être introduite en biais de haut en bas dans la cavité 15, pour être enfilée à travers le trou 18, puis basculée dans une position sensiblement horizontale comme montré dans les figures 1 et 2.

La mâchoire 8 peut avantageusement comporter une cavité 23 située par exemple au dessous du trou 22 pour recevoir, si on le désire, une serrure anti-vol (non montrée), qui peut être d'un type classique manoeuvrable à l'aide d'une clef appropriée. La serrure peut être agencée pour actionner un pène (non montré) mobile dans une fente sensiblement verticale 24 formée entre la tête de vis 11a et l'extrémité interne du trou 22, de telle façon que, dans l'état verrouillé de la serrure, le pène obture l'extrémité interne du trou 22 pour empêcher l'accès à la tête de vis 11a, tandis que dans l'état déverrouillé de la serrure, le pène dégage l'extrémité interne du trou 22 et permet à un tournevis introduit dans ce trou de parvenir jusqu'à la tête de vis 11a.

Selon une autre caractéristique de l'invention, chacune des deux rainures 14 de la mâchoire 9 est conformée et/ou dimensionnée en largeur pour permettre, en plus d'un mouvement de translation de la mâchoire 9 le long de la fente 6, un mouvement limité de basculement de cette mâchoire autour d'un axe transversal à l'axe longitudinal de la barre porte-charge 2, c'est-à-dire autour d'un axe perpendiculaire au plan de la figure 1 ou 2. A cet effet, chaque rainure 14 peut avoir une largeur plus grande de quelques millimètres que l'épaisseur de la paroi inférieure 4d de la barre porte-charge 2, additionnée éventuellement de l'épaisseur de la gaine 7 si celle-ci est présente. Toutefois, selon une forme préférée de réalisation de l'invention, chaque rainure 14 a de préférence des flancs latéraux qui sont convexes vers l'intérieur de la rainure de telle sorte que celle-ci ait une largeur qui augmente depuis une région médiane de la rainure 14 vers chacune des extrémités de celle-ci, comme montré dans la figure 2. Par contre, les deux rainures 13 de la mâchoire 8 ont de préférence une largeur constante, qui correspond à l'épaisseur de la paroi inférieure 4d de la barre porte-charge 2, additionnée éventuellement de l'épaisseur de la gaine 7, de telle sorte que la mâchoire 8 puisse uniquement coulisser le long de la fente 6.

De préférence, la partie supérieure 9a de la mâchoire 9 a, dans sa région supérieure orientée vers la paroi supérieure 4a du canal 5 de la barre porte-charge 2, un profil qui, vu dans une direction perpendiculaire à l'axe longitudinal du canal 5, a une forme en toit comme montré dans les figures 1 et 2. Le sommet du profil en toit peut être arrondi comme montré. A l'état desserré de la vis 11, il existe un jeu prédéterminé e entre le sommet du profil en toit et la paroi supérieure 4a du canal 5. Ce jeu correspond à l'amplitude limitée de basculement de la mâchoire 9.

Pour des raisons d'économie de matière, la face supérieure de la partie supérieure 9a de la mâchoire 9 peut être espacée de la paroi supérieure 4a du canal 5 d'une distance nettement plus grande que le jeu prédéterminé e. Dans ce cas, la mâchoire 9 peut être pourvue de deux nervures 9c et 9d qui font saillie sur sa face supérieure en direction de la paroi supérieure 4a du canal 5, s'étendent dans la direction longitudinale du canal 5 et sont respectivement adjacentes aux parois latérales 4c et 4b comme montré dans les figures 1 à 3. Dans ce cas, c'est le bord longitudinal supérieur des deux nervures 9c et 9d qui présente ledit profil en toit.

Comme cela est plus particulièrement visible dans la figure 1, l'écrou 12 peut être constitué par une plaque métallique qui comporte un trou taraudé pour la vis 11 et qui est logée dans une cavité 25 formée dans la mâchoire 9 entre les trous 19 et 21. Pour permettre la mise en place de la plaque-écrou 12 dans la cavité 25, cette dernière se présente sous la forme d'une fente qui s'étend à peu près verticalement vers le haut dans les parties inférieure et supérieure 9b et 9a de la mâchoire 9, jusqu'en haut de celle-ci, la cavité 25 débouchant entre les deux nervures 9c et 9d. Pour ne pas gêner le mouvement limité de basculement de la mâchoire 9, la cavité 25 en forme de fente a une largeur qui augmente du bas en haut de la cavité. Pour les mêmes raisons, la tige 11b de la vis 11 passe librement, avec un jeu radial approprié, dans les trous 19 et 21 de la mâchoire 9. Les trous 19 et 21 peuvent avoir une forme conique comme montré dans la figure 1.

De préférence, la plaque-écrou 12 est prolongée vers le haut par une partie 12a en forme de T, dont la branche verticale passe à travers la fente 6 de la paroi inférieure 4d de la barre porte-charge 2 et dont les branches horizontales, situées dans le canal 5 de la barre porte-charge 2, chevauchent par en dessus les bords de ladite fente 6 comme cela est plus particulièrement visible dans la figure 3. Ainsi, en cas de rupture accidentelle de la mâchoire 9 au niveau de ses deux rainures 14, la partie inférieure 9b de la mâchoire 9 reste accrochée à la barre porte-charge 2 grâce à la partie supérieure 12a de la plaque-écrou 12 et grâce à la tige 11b de la vis 11 qui passe dans les trous 19 et 21.

Comme cela est plus particulièrement visible dans les figures 1, 2 et 5, la mâchoire 8 peut avantageusement comporter une partie 8c qui forme un berceau de support pour la barre porte-charge 2 et qui s'étend parallèlement à l'axe longitudinal de celle-ci, depuis le haut de la partie inférieure 8b de la mâchoire 8 jusqu'à un emplacement situé au-delà de la mâchoire 9. La partie 8c formant berceau comporte une lumière longitudinale 26 à travers laquelle passe la partie inférieure 9b de la mâchoire 9 et dans laquelle celle-ci peut être déplacée lorsque la vis 11 est vissée ou dévissée dans l'écrou 12. La partie formant berceau 8c peut en outre comporter, à son extrémité qui est située au delà de la mâchoire 9, un tenon d'accrochage 27 à section transversale en forme de T, dont la branche verticale passe à travers la fente 6 de la paroi inférieure 4d de la barre porte-charge 2 et dont les branches horizontales chevauchent par en dessus les bords de ladite fente 6, comme cela est plus particulièrement visible dans la figure 4.

En plus de son rôle de berceau de support pour la barre porte-charge 2, la partie 8c sert à masquer les parties de la tige 11b de la vis 11 qui, sans cette partie 8c, serait exposées sous la barre 2. En outre, en service, la partie formant berceau 8c est destinée à reposer sur le dessus d'une barre longitudinale 28 (représentée d'une manière schématique en trait mixte dans les figures 1 et 2) d'une galerie fixe de toit d'un véhicule automobile sur lequel le porte-charge de l'invention peut être installé. Pour des raisons de simplification du dessin, la barre longitudinale 28 de la galerie de toit a été représentée avec une section transversale ronde. Toutefois, il va de soi que la section de la barre 28 pourrait avoir toute autre forme appropriée.

Afin de ne pas endommager les côtés opposés de la barre longitudinale 28 contre lesquels les deux mâchoires 8 et 9 sont appliquées en service, les faces mutuellement en regard des deux mâchoires 8 et 9 peuvent être respectivement garnies de tampons 29 et 31 en matière élastomère, comme montré dans les figures 1 et 2.

Le porte-charge selon l'invention peut être installé et fixé sur les deux barres longitudinales d'une galerie fixe de toit d'un véhicule automobile, comme par exemple la barre 28 montrée dans les figures 1 et 2, de la manière suivante. Tout d'abord, les deux mâchoires 8 et 9 de chacun des deux dispositifs de fixation 3 sont écartées l'une de l'autre, si nécessaire, pour que leur écartement soit plus grand que le diamètre ou la largeur de la barre longitudinale 28 correspondante. Ceci peut être effectué en introduisant un outil tel qu'un tournevis ou une clef appropriée dans le trou 22 et en faisant tourner la vis 11 dans le sens du dévissage. Ensuite, en faisant coulisser ensemble les deux mâchoires 8 et 9 de l'un ou l'autre ou des deux dispositifs de fixation 3 le long de la fente 6, l'écartement des deux dispositifs de fixation 3 est réglé de telle façon qu'il corresponde à l'entre-axes des deux barres longitudinales 28 de la galerie de toit. Ensuite, la barre porte-charge 2, avec ses deux dispositifs de fixation 3, est posée transversalement sur les deux barres longitudinales 28 de telle façon que les deux mâchoires 8 et 9 de chaque dispositif de fixation 3 soient placées respectivement de part et d'autre de la barre longitudinale 28 correspondante et que la partie formant berceau 8c de la mâchoire 8 repose transversalement sur le dessus de la barre 28. Ensuite, les deux mâchoires 8 et 9 de chaque dispositif de fixation 3 sont fermement serrées contre les côtés opposés de la barre longitudinale 28 correspondante. Ceci peut être effectué en introduisant à nouveau l'outil susmentionné dans le trou 22 et en faisant tourner, à l'aide de celui-ci, la vis 11 dans le sens du vissage. Quand et seulement quand la mâchoire 9 vient s'appliquer contre l'un des côtés de la barre longitudinale 28, cette mâchoire est alors soumise à un couple de forces, qui est dû, d'une part, à la force de traction exercée par la vis 11 sur l'écrou 12 et, d'autre part, à la force de réaction exercée par la barre longitudinale 28 sur la mâchoire 9. En conséquence, la mâchoire 9 bascule autour d'un axe perpendiculaire au plan de la figure 1, dans un sens tel que le sommet du profil en toit de la partie supérieure 9a de la mâchoire 9 (ou le sommet du profil en toit des nervures 9c et 9d) vient en contact avec la paroi supérieure 4a du canal 5. Il en résulte un autoblocage de la partie supérieure 9a de la mâchoire 9 par coincement de celle-ci entre la paroi supérieure 4a et la paroi inférieure 4d du canal 5. A ce stade, une fraction de tour ou quelques tours de la vis 11 peut être encore nécessaire pour parfaire le serrage de la mâchoire 8 contre le côté opposé de la barre longitudinale 28.

Il va de soi que le mode de réalisation de l'invention qui a été décrit ci-dessus a été donné à titre d'exemple purement indicatif et nullement limitatif, et que de nombreuses modifications doivent être facilement apportées par l'homme de l'art sans pour autant sortir du cadre de l'invention telle que décrite dans les revendications. C'est ainsi notamment que la rondelle 16 pourrait être remplacée par une plaque ayant une épaisseur et une forme semblables à celles de la plaque-écrou 12, avec une partie supérieure en forme de T, pénétrant à l'intérieur du canal 5 de la barre porte-charge 2 comme la partie 12a de la plaque-écrou 12 et permettant à la mâchoire 8 de rester accrochée à la barre porte-charge 2 en cas de rupture accidentelle de cette mâchoire au niveau de ses rainures 13.

## Revendications

1. Porte-charge pour un véhicule automobile équipé d'une galerie fixe de toit essentiellement composée de deux barres longitudinales (28) courant le long des côtés longitudinaux du toit du véhicule, ledit porte-charge (1) comprenant au moins une barre porte-charge (2) qui comporte, dans chacune de ses régions d'extrémité, un dispositif de fixation (3) pour fixer de façon détachable la barre porte-charge (2) à une barre longitudinale respective (28) de la galerie de toit, ladite barre porte-charge (2) ayant au moins un canal longitudinal (5) délimité par une paroi supérieure (4a), deux parois latérales (4b et 4c) et une paroi inférieure (4d) qui présente une fente (6) s'étendant sur au moins une partie de la longueur de la barre porte-charge, chaque dispositif de fixation (3) comprenant une paire de mâchoires (8,9) qui peuvent être déplacées dans le sens longitudinal de la barre porte-charge et qui comportent chacune une partie supérieure (8a,9a) logée dans le canal (5) de la barre porte-charge et une partie inférieure (8b,9b) qui fait saillie sous la barre porte-charge (2) pour saisir latéralement la barre longitudinale (28) correspondante de la galerie de toit, chaque mâchoire (8,9) comportant, dans ses côtés opposés qui font face aux parois latérales (4b,4c) du canal (5), des rainures (13,14) coopérant avec les bords de la fente (6) pour le guidage de la mâchoire (8,9) le long de la fente, chaque dispositif de fixation (3) comprenant en plus une vis de serrage (11) qui s'étend sensiblement dans le sens longitudinal de la barre porte-charge (2) et qui, lorsqu'elle est vissée dans un écrou (12), coopère avec celui-ci pour déplacer les deux mâchoires (8 et 9) l'une vers l'autre et serrer entre elles la barre longitudinale (28) de la galerie de toit, et en même temps pour bloquer l'une (9) des deux mâchoires dans le canal (5) de la barre porte-charge, **caractérisé en ce que** la tête (11a) de la vis de serrage (11) est logée dans une cavité (15) qui est formée dans la partie inférieure (8b) d'une première (8) des deux mâchoires (8 et 9) de telle façon que, en service, la vis de serrage (11) s'étende au moins en partie en dessous de la paroi inférieure (4d) de la barre porte-charge (2), et **en ce que** les rainures latérales (14) de la seconde (9) des deux mâchoires sont conformées et/ou dimensionnées en largeur pour permettre, en plus d'un mouvement de translation de ladite seconde mâchoire (9) le long de la fente (6) de la barre porte-charge (2), un mouvement limité de basculement de ladite seconde mâchoire autour d'un axe transversal à l'axe longitudinal de la barre porte-charge sous l'action d'un couple de forces engendré par la force de serrage de la vis de serrage (11) et par la force de réaction exercée sur la seconde mâchoire (9) par la barre longitudinale (28) de la galerie de toit, ledit mouvement de basculement provoquant un auto-blocage de la partie supérieure (9a) de ladite seconde mâchoire (9) par coincement de celle-ci entre les parois supérieure (4a) et inférieure (4d) du canal (5) de la barre porte-charge (2).

2. Porte-charge selon la revendication 1, **caractérisé en ce que** chaque rainure (14) de ladite seconde mâchoire (9) a des flancs latéraux qui sont convexes vers l'intérieur de la rainure de telle sorte que celle-ci ait une largeur qui augmente depuis une région médiane de la rainure vers chacune des extrémités de celle-ci.

3. Porte-charge selon la revendication 1 ou 2, **caractérisé en ce que** la partie supérieure (9a) de ladite seconde mâchoire (9) a, dans sa région supérieure orientée vers la paroi supérieure (4a) du canal (5) de la barre porte-charge (2), un profil qui, vu dans une direction perpendiculaire à l'axe longitudinal de la barre porte-charge, a une forme en toit avec un jeu prédéterminé (e) entre le sommet du profil en toit et la paroi supérieure (4a) dudit canal (5) à l'état desserré de la vis de serrage (11), le sommet du profil en toit entrant en contact avec la paroi supérieure (4a) du canal (5) lorsque ladite seconde mâchoire (9) bascule sous l'action dudit couple de forces.

4. Porte-charge selon la revendication 3, **caractérisé en ce que** le sommet dudit profil en toit est arrondi.

5. Porte-charge selon la revendication 3 ou 4, **caractérisé en ce que** la partie supérieure (9a) de ladite seconde mâchoire (9) a une face supérieure qui est espacée de la paroi supérieure (4a) dudit canal (5) et qui est munie de deux nervures (9c et 9d) qui s'étendent dans la direction longitudinale de la barre porte-charge, sont respectivement adjacentes aux parois latérales (4c et 4b) dudit canal et ont un bord longitudinal supérieur présentant ledit profil en toit.

6. Porte-charge selon l'une quelconque des revendications 1 à 5, **caractérisé en ce que** l'écrou (12) est logé dans la partie inférieure (9b) de ladite seconde mâchoire (9) et **en ce que** la vis de serrage (11) passe librement, avec un jeu radial, dans un trou (19,21) formé dans la partie inférieure (9b) de la seconde mâchoire (9) et s'étend entièrement au dessous de la paroi inférieure (4d) de la barre porte-charge (2), entre celle-ci et la barre longitudinale (28) de la galerie de toit.

7. Porte-charge selon la revendication 6, **caractérisé en ce que** l'écrou (12) est constitué par une plaque métallique qui comporte un trou taraudé et qui est logée dans une cavité (25) en forme de fente, qui s'étend à peu près verticalement vers le haut dans les parties inférieure (9b) et supérieure (9a) de la seconde mâchoire (9), jusqu'en haut de celle-ci, et dont la largeur augmente du bas en haut de la cavité (25).

8. Porte-charge selon la revendication 7, **caractérisé en ce que** la plaque-écrou (12) est prolongée vers le haut par une partie (12a) en forme de T, dont la branche verticale passe à travers la fente (6) de la paroi inférieure (4d) de la barre porte-charge (2) et dont les branches horizontales, situées dans le canal (5) de la barre porte-charge (2) chevauchent par en dessus les bords de ladite fente (6).

9. Porte-charge selon l'une quelconque des revendications 1 à 8, **caractérisé en ce que** la première mâchoire (8) comporte une partie (8c) qui forme un berceau de support pour la barre porte-charge (2) et qui s'étend parallèlement à l'axe longitudinal de la barre porte-charge depuis le haut de la partie inférieure (8b) de la première mâchoire (8) jusqu'à un emplacement situé au delà de la seconde mâchoire (9), ladite partie formant berceau (8c) reposant en service sur le dessus de la barre longitudinale (28) de la galerie de toit et comportant une lumière longitudinale (26) à travers laquelle passe la partie inférieure (9b) de la seconde mâchoire (9).

10. Porte-charge selon la revendication 9, **caractérisé en ce que** la partie formant berceau (8c) comporte, audit emplacement qui est situé au delà de la seconde mâchoire (9), un tenon d'accrochage (27) à section transversale en forme de T, dont la branche verticale passe à travers la fente (6) de la paroi inférieure (4d) de la barre porte-charge (2) et dont les branches horizontales chevauchent par en dessus les bords de ladite fente (6).

## Patentansprüche

1. Lastträger für einen Kraftwagen mit einem festen Dachträger, der im Wesentlichen aus zwei entlang den Längsseiten des Fahrzeugdachs verlaufenden Längsstangen (28) zusammengesetzt ist, wobei der genannte Lastträger (1) mindestens eine Lastträger-Stange (2) aufweist, die in jedem ihrer Endbereiche eine Befestigungsvorrichtung (3) zur lösbaren Befestigung der Lastträger-Stange (2) an jeweils einer Längsstange (28) des Dachträgers besitzt, wobei die genannte Lastträger-Stange (2) mindestens einen Längskanal (5) aufweist, der durch eine obere Wand (4a), zwei Seitenwände (4b und 4c) und eine untere Wand (4d) begrenzt ist, die einen sich mindestens entlang einem Teil der Länge der Lastträger-Stange erstreckenden Schlitz (6) aufweist, wobei jede Befestigungsvorrichtung (3) ein Paar Klemmbacken (8, 9) aufweist, die in der Längsrichtung der Lastträger-Stange verstellbar sind und je einen im Kanal (5) der Lastträger-Stange angeordneten Oberteil (8a, 9a) und einen Unterteil (8b, 9b) aufweisen, der unter der Lastträger-Stange (2) hervorragt, um die entsprechende Längsstange (28) des Dachträgers seitlich zu fassen, wobei jede Klemmbacke (8, 9) auf ihren entgegengesetzten, den Seitenwänden (4b, 4c) des Kanals (5) zugewandten Seiten Nuten (13, 14) aufweist, die mit den Rändern des Schlitzes (6) zusammenwirken, um die Klemmbacken (8, 9) entlang dem Schlitz (6) zu führen, wobei jede Befestigungsvorrichtung (3) noch eine Klemmschraube (11) aufweist, die sich ungefähr in der Längsrichtung der Lastträger-Stange (2) erstreckt und die, wenn sie in eine Mutter (12) eingeschraubt wird, mit dieser zusammenwirkt, um die beiden Klemmbacken (8 und 9) gegeneinander zu schieben und die Längsstange (28) des Dachträgers zwischen diesen einzuklemmen und gleichzeitig die eine (9) der zwei Klemmbacken im Kanal (5) der Lastträger-Stange zu blockieren, **dadurch gekennzeichnet, dass** der Kopf (11a) der Klemmschraube (11) derart in einem im Unterteil (8b) einer ersten (8) der beiden Klemmbacken (8 und 9) gebildeten Hohlraum (15) angeordnet ist, dass die Klemmschraube (11) sich bei der Verwendung mindestens zum Teil unterhalb der unteren Wand (4d) der Dachträger-Stange (2) erstreckt, und dass die seitlichen Nuten (14) der zweiten (9) der zwei Klemmbacken so ausgebildet und/oder so breit bemessen sind, damit zusätzlich zu einer Verschiebebewegung der genannten zweiten Klemmbacke (9) entlang dem Schlitz (6) der Dachträger-Stange (2) unter der Einwirkung eines durch die Klemmkraft der Klemmschraube (11) und durch die von der Längsstange (28) des Dachträgers auf die Klemmbacke (9) ausgeübten Reaktionskraft erzeugten Drehmoments eine begrenzte Kippbewegung der genannten zweiten Klemmbacke um eine quer zur Längsachse der Dachträger-Stange verlaufende Achse möglich ist, wobei die genannte Kippbewegung eine selbsttätige Blockierung Oberteils (9a) der genannten zweiten Klemmbacke (9) durch Verklemmen von dieser zwischen der oberen Wand (4a) und der unteren Wand (4d) des Kanals (5) der Dachträger-Stange (2) bewirkt.

2. Lastträger nach Anspruch 1, **dadurch gekennzeichnet, dass** jede Nut (14) der genannten zweiten Klemmbacke (9) seitliche Flanken hat, die derart konvex gegen das Innere der Nut sind, dass diese eine Breite hat, die von einem mittleren Bereich der Nut gegen beide Enden von dieser zunimmt.

3. Lastträger nach Anspruch 1 oder 2, **dadurch gekennzeichnet, dass** der Oberteil (9a) der genannten zweiten Klemmbacke (9) in seinem oberen, gegen die obere Wand (4a) des Kanals (5) der Lastträger-Stange (2) gewandten Bereich in einer zur Längsachse der Lastträger-Stange senkrechten Blickrichtung einen dachförmigen Umriss mit einem im gelösten Zustand der Klemmschraube (11) vorgegebenen Spiel (e) zwischen dem Scheitel des dachförmigen Umrisses und der oberen Wand (4a) des genannten Kanals (5) hat, wobei der Scheitel des dachförmigen Umrisses in Berührung mit der oberen Wand (4a) des Kanals (5) gelangt, wenn die genannte zweite Klemmbacke (9) unter der Einwirkung des genannten Drehmoments kippt.

4. Lastträger nach Anspruch 3, **dadurch gekennzeichnet, dass** der Scheitel des genannten dachförmigen Umrisses abgerundet ist.

5. Lastträger nach Anspruch 3 oder 4, **dadurch gekennzeichnet, dass** der Oberteil (9a) der genannten zweiten Klemmbacke (9) eine Oberseite hat, die von der oberen Wand (4a) des genannten Kanals (5) in Abstand steht und mit zwei Rippen (9c und 9d) versehen ist, die in der Längsrichtung der Lastträger-Stange verlaufen, jeweils einer der Seitenwände (4c und 4b) des genannten Kanals benachbart sind und einen oberen, den genannten dachförmigen Umriss aufweisenden Längsrand haben.

6. Lastträger nach irgendeinem der Ansprüche 1 bis 5, **dadurch gekennzeichnet, dass** die Mutter (12) im Unterteil (9b) der genannten zweiten Klemmbacke (9) angeordnet ist und dass die Klemmschraube (11) frei, mit radialem Spiel ein im Unterteil (9b) der zweiten Klemmbacke (9) gebildetes Loch (19, 21) durchdringt und sich vollständig unterhalb der unteren Wand (4d) der Lastträger-Stange (2) zwischen dieser und der Längsstange (28) des Dachträgers erstreckt.

7. Lastträger nach Anspruch 6, **dadurch gekennzeichnet, dass** die Mutter (12) durch eine metallische Platte gebildet ist, die eine Gewindebohrung aufweist und in einem schlitzförmigen Hohlraum (25) angeordnet ist, der im Unterteil (9b) und Oberteil (9a) der zweiten Klemmbacke (9) ungefähr vertikal aufwärts bis in den obersten Bereich von dieser verläuft und dessen Breite von unten nach oben zunimmt.

8. Lastträger nach Anspruch 7, **dadurch gekennzeichnet, dass** die Platten-Mutter (12) nach oben durch einen T-förmigen Teil (12a) verlängert ist, dessen vertikaler Schenkel durch den Schlitz (6) der unteren Wand (4d) der Dachträger-Stange (2) hindurchdringt und dessen horizontale, sich im Kanal (5) der Dachträger-Stange (2) befindende Schenkel die Ränder des genannten Schlitzes (6) oben übergreifen.

9. Lastträger nach irgendeinem der Ansprüche 1 bis 8, **dadurch gekennzeichnet, dass** die erste Klemmbacke (8) einen Teil (8c) aufweist, der einen Tragwiege für die Dachträger-Stange (2) bildet und sich parallel zur Längsachse der Dachträger-Stange vom oberen Bereich des Unterteils (8b) der ersten Klemmbacke (8) bis zu einer Stelle jenseits der zweiten Klemmbacke (9) erstreckt, wobei der die Wiege (8c) bildende Teil sich bei der Verwendung auf der Oberseite der Längsstange (28) des Dachträgers abstützt und einen Längsschlitz (26) aufweist, durch den der Unterteil (9b) der zweiten Klemmbacke (9) hindurchdringt.

10. Lastträger nach Anspruch 9, **dadurch gekennzeichnet, dass** der eine Wiege (8c) bildende Teil bei der genannten, sich jenseits der zweiten Klemmbacke (9) befindenden Stelle einen im Querschnitt T-förmigen Einhäng-Zapfen (27) aufweist, dessen vertikaler Schenkel durch den Schlitz (6) der unteren Wand (4d) der Dachträger-Stange (2) hindurchdringt und dessen horizontale Schenkel die Ränder des genannten Schlitzes (6) oben übergreifen.

## Claims

1. Load carrier for a motor vehicle equipped with a fixed roof rack essentially composed of two longitudinal bars (28) running along the longitudinal sides of the vehicle roof, said load carrier (1) comprising at least one load-carrying bar (2) which comprises, in each of its end regions, a fastening device (3) for fastening the load-carrying bar (2) detachably to a respective longitudinal bar (28) of the roof rack, said load-carrying bar (2) having at least one longitudinal channel (5) delimited by an upper wall (4a), two lateral walls (4b and 4c) and a lower wall (4d) which has a slot (6) extending over at least part of the length of the load-carrying bar, each fastening device (3) comprising a pair of jaws (8,9) which can be displaced in the longitudinal direction of the load-carrying bar and which each comprise an upper part (8a, 9a) seated in the channel (5) of the load-carrying bar and a lower part (8b,9b) which projects below the load-carrying bar (2) in order to grip laterally the corresponding longitudinal bar (28) of the roof rack, each jaw (8,9) comprising, in its opposite sides which face the lateral walls (4b,4c) of the channel (5), grooves (13,14) cooperating with the edges of the slot (6) for the guidance of the jaw (8,9) along the slot, each fastening device (3) further comprising a clamping screw (11) which extends substantially in the longitudinal direction of the load-carrying bar (2) and which, when it is screwed into a nut (12), co-operates with the latter in order to displace the two jaws (8 and 9) towards one another in order to clamp between them the longitudinal bar (28) of the roof rack and, at the same time, in order to lock one (9) of the two jaws in the channel (5) of the load-carrying bar, **characterized in that** the head (11a) of the clamping screw (11) is seated in a cavity (15) which is formed in the lower part (8b) of a first (8) of the two jaws (8 and 9), in such a way that, during operation, the clamping screw (11) extends at least partially below the lower wall (4d) of the load-carrying bar (2), and **in that** the lateral grooves (14) of the second (9) of the two jaws are shaped and/or dimensioned in width in order to allow, in addition to a translational movement of said second jaw (9) along the slot (6) of the load-carrying bar (2), a limited tilting movement of said second jaw about an axis transverse to the longitudinal axis of a load-carrying bar under the action of a force couple generated by the clamping force of the clamping screw (11) and by the reaction force exerted on the second jaw (9) by the longitudinal bar (28) of the roof rack, said tilting movement causing a self-locking of the upper part (9a) of said second jaw (9) as a result of the wedging of the latter between the upper (4a) and lower (4d) walls of the channel (5) of the load-carrying bar (2).

2. Load carrier according to Claim 1, **characterized in that** each groove (14) of said second jaw (9) has lateral flanks which are convex towards the interior of the groove, in such a way that the latter has a width which increases from a median region of the groove towards each of the ends of the latter.

3. Load carrier according to Claim 1 or 2, **characterized in that** the upper part (9a) of said second jaw (9) has, in its upper region directed towards the upper wall (4a) of the channel (5) of the load-carrying bar (2), a profile which, seen in a direction perpendicular to the longitudinal axis of the load-carrying bar, has a roof shape with a predetermined play (e) between the top of the roof profile and the upper wall (4a) of said channel (5), when the clamping screw (11) is in the released state, the top of the roof profile coming into contact with the upper wall (4a) of the channel (5) when said second jaw (9) tilts under the action of said force couple.

4. Load carrier according to Claim 3, **characterized in that** the top of said roof profile is rounded.

5. Load carrier according to Claim 3 or 4, **characterized in that** the upper part (9a) of said second jaw (9) has an upper face which is spaced from the upper wall (4a) of said channel (5) and which is provided with two ribs (9c and 9d) which extend in the longitudinal direction of the load-carrying bar, are respectively adjacent to the lateral walls (4c and 4b) of said channel and have an upper longitudinal edge having said roof profile.

6. Load carrier according to any one of Claims 1 to 5, **characterized in that** the nut (12) is seated in the lower part (9b) of said second jaw (9), and **in that** the clamping screw (11) passes freely, with radial play, through a hole (19, 21) formed in the lower part (9b) of the second jaw (9) and extends completely below the lower wall (4d) of the load-carrying bar (2), between the latter and the longitudinal bar (28) of the roof rack.

7. Load carrier according to Claim 6, **characterized in that** the nut (12) consists of a metal plate which comprises an internally threaded hole and which is seated in a slot-shaped cavity (25) which extends approximately vertically upwards in the lower (9b) and upper (9a) parts of the second jaw (9), as far as the top of the latter, and the width of which increases from the bottom of the cavity (25) to the top.

8. Load carrier according to Claim 7, **characterized in that** the plate/nut (12) is extended upwards by means of a T-shaped part (12a), the vertical branch of which passes through the slot (6) of the lower wall (4d) of the load-carrying bar (2) and the horizontal branches of which, located in the channel (5) of the load-carrying bar (2), straddle over the edges of said slot (6).

9. Load carrier according to any one of Claims 1 to 8, **characterized in that** the first jaw (8) comprises a part (8c) which forms a supporting cradle for the load-carrying bar (2) and which extends parallel to the longitudinal axis of the load-carrying bar from the top of the lower part (8b) of the first jaw (8) as far as a point located beyond the second jaw (9), said cradle-forming part (8c) resting, during operation, on top of the longitudinal bar (28) of the roof rack and comprising a longitudinal aperture (26), through which the lower part (9b) of the second jaw (9) passes.

10. Load carrier according to Claim 9, **characterized in that** the cradle-forming part (8c) comprises, at said point which is located beyond the second jaw (9), a catching tenon (27) of T-shaped cross section, the vertical branch of which passes through the slot (6) of the lower wall (4d) of the load-carrying bar (2) and the horizontal branches of which straddle over the edges of said slot (6).
